Europäisches Patentamt

European Patent Office

Office européen des brevets

(11) Publication number: **0 091 213**
**B1**

# (12) EUROPEAN PATENT SPECIFICATION

(45) Date of publication of patent specification: **28.09.88**

(21) Application number: **83301331.1**

(22) Date of filing: **10.03.83**

(51) Int. Cl.⁴: $A\ 01\ N\ 25/12$, $A\ 01\ N\ 25/32$, $A\ 01\ N\ 47/22$, $A\ 01\ N\ 47/24$, $A\ 01\ C\ 1/00$

(54) **Pesticidal dry-form seed treater compositions.**

(30) Priority: **05.04.82 US 365760**

(43) Date of publication of application:
**12.10.83 Bulletin 83/41**

(45) Publication of the grant of the patent:
**28.09.88 Bulletin 88/39**

(84) Designated Contracting States:
**AT BE CH DE FR GB IT LI NL SE**

(56) References cited:
**EP-A-0 010 630**
**US-A-4 272 417**

(73) Proprietor: **FMC Corporation**
**2000 Market Street**
**Philadelphia Pennsylvania 19103 (US)**

(72) Inventor: **Khan, Mir Naqui Ali**
**1215 Quail Ridge Drive**
**Plainsboro New Jersey 08536 (US)**

(74) Representative: **Crampton, Keith John Allen et al**
**D YOUNG & CO 10 Staple Inn**
**London WC1V 7RD (GB)**

Courier Press, Leamington Spa, England.

**Description**

This invention relates to pesticidal dry-form compositions for seed treatment; specifically, to substantially non-phytotoxic pulverulent dry-form seed treater compositions of phytotoxic liquid insecticides or nematicides. The compositions are made substantially non-phytotoxic by the incorporation therein of a liquid glycol or glycol derivative that is substantially insoluble in or does not substantially solubilize the pest control agent.

Over the years, various methods have been employed in attempts to control plant pests that attack seeds and seedlings. Prior to the advent of seed treater compositions, there were few viable alternatives to simply sterilizing the soil by one or more applications of a pesticide just prior to or after planting. Today, the use of pesticide-treated seeds is a frequently used method for protecting agricultural crops during the seed or seeding stage, particularly for grain or vegetable crops.

The use of pesticide-treated seeds advantageously places the pest control agent at the site where pest attack will occur, thereby eliminating the waste attendant upon treating the entire cultivated acreage. Treatment of seeds with a systemic pest control agent affords protection to the seed itself, to emerging roots and upward growth of seedlings vulnerable to attack by soil borne insects and nematodes, and to seedlings newly emergent from the soil which are especially vulnerable to attack by above-ground insects and other pests.

Because use of a seed treater composition necessarily brings the components of the composition in close physical contact with the seeds to be treated, great care must be exercised in selecting components that would not be phytotoxic to the seeds or seedlings. Since a wide variety of non-phytotoxic adjuvants, carriers, and other miscellaneous inert ingredients for seed treater compositions are known in the art, selection of appropriate non-phytotoxic additives may usually be made without difficulty. Thus, it is generally the phytotoxic propensity of the pest control agent itself that is the limiting factor in designing a composition for seed treatment, and is determinative of the viability of that particular form of application for the compound.

Generally, crystalline or otherwise solid pesticides, when applied in that form to seeds, are not phytotoxic and may safely be used in various conventional seed treater compositions. Many liquid pest control agents, however, are phytotoxic to seeds and seedlings, and have not heretofore been suitable candidates for seed treatment use. Being liquids, these materials are in a form readily absorbed by the seed which is thereby made particularly vulnerable to any phytotoxic property of the pesticide. A phytotoxic effect is usually evidenced by a reduced germination rate of treated seeds or by an inhibition of seedling growth.

Seed treater compositions are either liquid or solid (dry) compositions. Liquid seed treater compositions are usually slurries or suspensions of the active ingredient, adhesive sticker or binder, and various adjuvants in a liquid carrier, frequently water. There are a number of disadvantages to using liquid seed treater compositions that are generally not encountered with dry-form compositions. The larger number of ingredients commonly used in liquid compositions generally makes them more expensive than dry-form compositions. Also, special equipment may be needed for applying liquid compositions to the seeds, a separate step for drying the treated seeds may be necessary, and liquid compositions frequently develop stability problems upon storage for long periods of time.

Dry-form seed treater compositions are basically homogeneous powdery mixtures of pest control agent, binder, and dry carrier. Usually, they will also contain one or more of various adjuvants. Like liquid-form compositions, dry-form compositions also present certain problems. They tend to be dusty, as do seeds treated with them. In addition to being unpleasant for personnel who prepare the compositions or handle the treated seeds, dustiness increases exposure to inherent hazards of the pesticide. Also, in many cases, especially where a high loading rate is desired, seeds must be treated with water or some other liquid prior to application of a dry-form seed treater composition to aid in binding the composition to the seed. Furthermore, binding agents frequently used in dry-form compositions such as the compositions disclosed in U.K. Patent No. GB—A—830,655, published March 16, 1960, are materials based on mineral or vegetable oil and are unsuitable for use with phytotoxic liquid pesticides. Such oils have an affinity for many seeds and are generally miscible with many commercially available liquid pesticides. They can thereby act as a vehicle for dissolving the pesticide and bringing it into contact with the seeds.

European Patent Specification EP—A—001630 discloses liquid seed-treatment compositions containing a fungicide, an insecticide, minor additives and polyethylene glycol as a binder. It is not clear however, that polyethylene glycol *per se* is intended in this document because the material in question is said to be water-insoluble, unlike even the high-molecular-weight forms of polyethylene glycol.

In the compositions of the present invention, as will appear below, certain liquid glycols or glycol derivatives are effective binding agents for dry-form seed treater compositions; and, where the pesticide component of the seed treater composition is a liquid phytotoxic compound, use in the composition of any such of the glycols or derivatives that are substantially mutually insoluble in the phytotoxic ingredient will effectively safen the composition for seed treatment use by protecting the seed against the phytotoxicity of the pest control agent. Moreover, inclusion of such a glycol or glycol derivative binder-safener in a dry-form seed treater composition as described herein results in a low-dust composition that may be applied dry to seeds without the need for prewetting or pre-treating the seeds. The pesticide-treated seeds are prepared by mixing the composition and seeds together, thereby forming a low-dust adherent coating on the seeds, the pest control agent being dispersed in the adherent coating. The pest control agent comprises from 0.1% to 2.0%, preferably 0.1 to 1.0%, of the total weight (seed plus coating) of the treated seeds. The percent by weight of the pest control agent on the seeds is referred to herein as the loading rate.

According to this invention there is provided a substantially non-phytotoxic, pulverulent, dry-form seed treater composition containing a phytotoxic liquid pest control agent suitable for application to plant seeds, to product seeds and to seedlings against insects or nematodes, containing, by weight

(a) from 1 to 50% of a phytotoxic insect or nematode pest control agent that is a liquid at ambient temperature,

(b) from 5 to 60% of a binder-safener that is ethylene glycol, propylene glycol, trimethylene glycol, glycerol, a polyethylene glycol having a molecular weight in the range of 100 to 600, a polypropylene glycol having a molecular weight in the range of 200 to 1000, a block polymer of ethylene oxide and propylene oxide having a molecular weight in the range of 1000 to 5000 and a viscosity in the range of 150 to 800 mPa · s at a temperature in the range of 25° to 60°C, or a poly($C_{2-4}$ alkylene) glycol ether of a $C_{5-15}$ primary or secondary alcohol or of octylphenol or nonylphenol, the polyalkylene glycol ether having a molecular weight in the range of 300 to 4000 and a viscosity in the range of 200 to 4000 mPa · s at a temperature in the range of 25° to 60°C, with the proviso that the glycol or glycol derivative is substantially insoluble in or does not substantially solubilize the pest control agent at ambient temperature, and

(c) sufficient solid sorptive agriculturally acceptable carrier to produce a pulverulent solid composition.

The present invention also provides a method of protecting plant seeds and seedlings against insect or nematode pests comprising applying to the seeds, before they are planted, an insecticidally or nematicidally effective amount of such a composition, as well as crop seed protected against insects or nematodes by an adherent coating containing an insect or nematode pest control agent in which the coating is obtained by applying such a composition to the seeds.

The present invention also provides a method of reducing the phytotoxicity of a phytotoxic liquid insect or nematode pest-control agent for use in a dry-form seed-treater composition comprising mixing with it a binder-safener as defined above in (b), the amount of binder-safener being 0.4 to 5 times the amount by weight of the phytotoxic liquid pest-control agent present.

The term "dry-form" as used herein means solid as opposed to liquid, and does not relate to the presence or absence of water. The term "pulverulent" means consisting of or reducible to a powder. "Phytotoxic" or "non-phytotoxic" refers to the presence or absence of phytotoxicity to seeds or seedlings. "Ambient temperature" for a material is any temperature in the range of temperature normally encountered during use of the material for its intended purpose. Ambient temperature for a pest control agent, alone or in admixture with one or more other materials, will usually by a temperature in the range 10° to 50°.

The present compositions of the invention, while suitable for use with most pest control agents, are designed especially for use with phytotoxic liquid pest control agents, primarily insecticides or nematicides that are liquids at ambient temperature. A preferred pest control agent is carbosulfan, a commercial systemic insecticide-nematicide. Carbosulfan, the common name of 2,3 - dihydro - 2,2 - dimethyl - 7 - benzofuranyl[(di - *n* - butyl) aminosulfenyl][methyl] carbamate, is an N-sulfenylated derivative of the commercial insecticide carbofuran, and is disclosed in U.S. Patent No. 4,006,231. Other phytotoxic liquid N-substituted derivatives of carbofuran, including other N-sulfenyl derivatives such as 2,3 - dihydro - 2,2 - dimethyl - 7 - benzofuranyl[bis(ethoxycarbonylmethyl)aminosulfenyl][methyl]carbamate, may also be suitably used in the present invention. Carbofuran is the common name of 2,3 - dihydro - 2,2 - dimethyl - 7 - benzofuranyl methylcarbamate, and is described in U.S. Patent No. 3,474,171. Other preferred pest control agents include terbufos (S - *tert* - butylthiomethyl - O,O - diethyl phosphorodithioate), fonofos (O - ethyl - S - phenyl ethylphosphonodithioate), and phorate (O,O - diethyl - S - ethylthiomethyl phosphorodithioate).

The pest control agent comprises by weight from 1 to 50%, preferably 10 to 50%, of the composition. In most cases, the concentration will be in the range of 10 to 35%, most frequently 20 to 30%. Examples 2 and 3 below describe the preparation of 25% w/w carbosulfan compositions, and Example 4 describes the preparation of a 30% w/w carbosulfan composition.

The glycol or glycol derivative component of the present seed-treater composition is a multipurpose ingredient. It functions as a dedusting agent and, if it's a polyhydroxy compound, as an "acidic hot-spot" deactivator for dry silicate carriers. Its primary functions, however, are as a binding agent for adhering the composition to the seeds, and as a safening agent for reducing the phytotoxicity of the pest control agent to the seeds and seedlings.

The glycol or glycol derivative is advantageously incorporated into the seed treater composition by spraying the material into a blender or mixer containing a mixture of pest control agent and dry carrier. Thus, the binder-safener should be a sprayable liquid at ambient conditions or with slight heating, for example, up to about 60°C. A preferred binder-safener is polyethylene glycol having a molecular weight of about 400.

The binding function of the binder-safener requires use of more of the material that would otherwise be needed for effective safening, and the presence in the composition of a sufficient amount for binding will also give adequate safening. Depending on the inherent pesticidal activity of the pest control agent

3

used, it may be necessary, for effective pest control, to have a loading rate of the pest control agent on the seeds in the range of 0.1 to 2.0% w/w, usually 0.1 to 1.0% w/w, based on the weight of the treated seeds. To achieve such loading rates, the binder-safener will comprise by weight from 5 to 60%, usually 20 to 50%, of the composition, depending, of course, on the concentration of pest control agent in the composition, the bulk of the dry carrier and possibly other additives, and the surface texture of the seeds. Where a high loading rate is desired, or where the seeds to be treated have a smooth surface texture which hinders effective binding, it is advantageous to employ a high concentration of the pest control agent in the composition and to use a highly sorptive carrier, thereby decreasing the bulk of the composition to be applied to the seeds.

The carrier in the present seed treater compositions should be an inert, agriculturally acceptable (non-phytotoxic), sorptive material, capable of absorbing or adsorbing relatively large volumes of liquid. It may be a naturally occurring material or a synthetic material. Silicas and silicates are particularly suitable; especially precipitated silica, hydrous calcium silicate, and the various hydrous aluminum/magnesium silicates and mixtures commonly used in the art such as attapulgite, kaolin, montmorillonite, talc, pyrophyllite, and diatomite. A preferred carrier, because of its very high sorptive capacity, is hydrous calcium silicate.

The amount of carrier used should be a quantity sufficient to produce a pulverulent dry-form composition. Usually, this will be an amount equal to 10 to 70%, more frequently 25 to 50%, of the weight of the composition, depending upon such factors as the sorptive capacity of the selected carrier and the desired concentration of active ingredient.

Many dry carriers, especially silica based materials, contain acid-active sites ("acidic hot-spots") which may catalyze the decomposition of acid labile materials they come in contact with. A number of commercially available pesticides, including carbosulfan, are known to be acid sensitive, and may decompose over a period of time in the presence of such centers of acidic activity. Therefore, depending upon the nature of the carrier and the pest control agent used, the present seed treater compositions may advantageously contain an acid neutralizing agent or deactivator. The deactivator may be any of various alcohols, amines, ketones, or mildly basic organic compounds commonly used for that purpose in the art. Polhydroxy compounds, such as diethylene glycol or other glycols, are preferred. If the binder-safener component of the composition is a polyhydroxy compound, inclusion of a separate material in the composition for deactivation purposes would not be necessary. In general, an acidic hot-spot deactivator, separate from the binder-safener component, will comprise by weight 0 to 10% of the present compositions, usually 0 to 3%.

The present seed treater compositions may also contain various amounts of other adjuvants or inert ingredients. Many pest control agents spontaneously decompose in the presence of light, air, or moisture and have an unacceptably short shelf life. The insecticide carbosulfan and other N-sulfenylated derivatives of carbofuran have been reporated to decompose slowly to give carbofuran as a decomposition product. Organophosphates and related insecticides are also susceptible to decomposition upon standing. Various chemical stabilizers are available for addition to pesticidal compositions to stabilize them against such spontaneous decomposition, and may advantageously be used in the present compositions. Frequently, for organophosphates and related materials, and for the N-sulfenylated derivatives of carbofuran such as carbosulfan, the chemical stabilizer will be an antioxidant, generally an epoxide compound. Epoxidized soybean oil is a preferred stabilizer for use herein with carbosulfan or related compounds. Other especially desirable stabilizers are disclosed in U.S. Patent No. 4,281,014, incorporated herein by reference. When a chemical stabilizer is used it will generally comprise by weight 0.01 to 20% of the composition. Most frequently, particularly where epoxidized soybean oil is used to stabilize carbosulfan, the amount of stabilizer used will be in the range of 2 to 8%.

A dye or pigment such as methylene blue or rhodamine B may also be included in the present compositions, so that the treated seeds may be readily recognized or identified by a distinctively colored coating. Generally, a dye or pigment will comprise by weight from 0 to 5% of the composition. Examples 3 and 4 below describe the preparation of seed treater compositions containing 1% w/w of rhodamine B.

In preparing the present seed treater compositions, the pest control agent may be incorporated as technical grade material or, more conveniently, as a solid base formulation. Solid base formulations of commercial insecticides are admixtures of the technical grade pesticide with a dry carrier and other adjuvants. They have improved handling characteristics over the undiluted technical material, and are generally used as solid stock formulations for preparing granular or other types of formulations. A solid base formulation of carbosulfan will generally contain by weight from 10 to 60% of technical grade carbosulfan, from 5 to 70% of a dry-form, sorptive carrier, and optionally, various amounts of adjuvants such as a chemical stabilizer, dispersing agent, dye or pigment, acidic hot-spot deactivator, and other additives. A typical carbosulfan solid base formulation containing approximately 40% w/w active ingredient, useful in the preparation of the present compositions, is described in Example 1 below.

In applying the present seed treater compositions to seeds, no special equipment is required, and it is not necessary to pretreat or prewet the seeds; the seeds and seed treater composition are merely mixed together in a container until the dry composition is completely and uniformly distributed over the surface of the seeds. Mechanical mixing or rolling is preferred but not necessary. In some instances, it may be advantageous for cosmetic purposes to pretreat the seeds with a little water or other suitable liquid, and

# 0 091 213

apply the seed treater composition to the wetted seeds. Generally, about 2% of the liquid, based on the weight of the seeds before treatment, is sufficient to wet the seeds.

Treatment of seeds before they are planted with an insecticidally or nematicidally effective amount of a seed treater composition of this invention will protect the seeds and seedlings against insects or nematodes. The insect or nematode control agent will generally comprise from 0.1% to 2.0%, preferably 0.1% to 1.0%, of the weight of the treated seeds. The present composition may be used with crop seed used in agriculture, for example, rice, wheat, sorghum, corn, barley, cotton, sugar beets, rape, dry beans, soybeans, flax, alfalfa, sunflower, and peanuts, particularly rice. Many seed processors or vendors treat their seeds with one or more pesticides, generally a fungicide and/or an insecticide, to protect the seeds during periods of storage. As a rule, most commercially available seeds useful in the practice of this invention will have been treated in this manner. Such treatment is ineffective in giving adequate protection to the seeds after planting, and is not a substitute for seed treatment of the present type.

Another aspect of the present invention comprises a method of reducing the phytotoxicity of a phytotoxic liquid pest control agent for use in a dry-form seed treater composition, by mixing the pest control agent with a glycol or glycol derivative discussed above, preferably polyethylene glycol having a molecular weight of about 400. A preferred pest control agent is the insecticide-nematicide carbosulfan. The glycol or glycol derivative is employed in an amount equal to 0.1 to 60 times the amount by weight of the phytotoxic liquid pest control agent present. Usually, the amount will be 0.4 to 5, more frequently 0.4 to 2, times the amount of pest control agent used.

The following examples, which are intended to be illustrative of the present invention, describe in detail the preparation of seed treater compositions of the invention and application of them to seeds. In the examples, the words "seed treater" are frequently used in their abbreviated form "ST" for convenience.

## Example 1
### Preparation of 40% W/W carbosulfan solid base formulation

| Ingredients | % W/W | Amount (kg) |
|---|---|---|
| Carbosulfan (89% technical—contains 4% epoxidized soybean oil) | 45.39 | 123.55 |
| Diethylene glycol, deactivator | 2.00 | 5.45 |
| Epoxidized soybean oil, stabilizer | 3.20 | 8.71 |
| Sugar-free sodium-based ligno-sulfonates, dispersant | 2.50 | 6.81 |
| Sorptive hydrous calcium silicate, carrier | 46.91 | 127.72 |
| Total | 100.00% | 272.24 kg |

The equipment required for preparation of a 272.24 kg (600 lb) batch of carbosulfan 40% solid base consists of a ribbon blender fitted with nozzles, an impregnation tank with an agitator and pump, an attrition mill, and associated scales, hoppers, elevators, hoods, and dust collection equipment.

The calcium silicate, 127.72 kg, was added to an operating ribbon blender. Diethylene glycol, 5.45 kg, was added to an impregnation tank, and sprayed into the ribbon blender. The stabilized carbosulfan, 123.55 kg, and the epoxidized soybean oil, 8.71 kg, were thoroughly mixed in an impregnation tank, then sprayed into the calcium silicate-diethylene glycol mixture in the ribbon blender at such a rate to ensure even distribution. To this mixture was added 6.81 kg of sugar-free sodium-based lignosulfonates. The formulation was mixed for 10 minutes, then passed through an attrition mill.

## Example 2
### Preparation of 25% W/W carbosulfan ST formulation (formulation 2)

| Ingredients | % W/W | Amount (kg) |
|---|---|---|
| Carbosulfan 40% solid base | 62.50 | 2.50 |
| Polyethylene glycol—400 mol. wgt. | 37.50 | 1.50 |
| Total | 100.00% | 4.00 kg |

Carbosulfan 40% solid base, 2.50 kg, was placed in a ribbon blender and sprayed with 1.50 kg of polyethylene glycol having a molecular weight of about 400. The combination was mixed thoroughly for ninety minutes.

Example 3

Preparation of 25% W/W carbosulfan ST formulation containing a dye (formulation 3)

| Ingredients | % W/W | Amount (g) |
|---|---|---|
| Carbosulfan 40% solid base | 64.0 | 64.0 |
| Polyethylene glycol—400 mol. wgt. | 35.0 | 35.0 |
| Rhodamine B | 1.0 | 1.0 |
| Total | 100.00% | 100.0 g |

Carbosulfan 40% solid base, 64.0 g, and rhodamine B, 1.0 g, were placed in a blender, and blended at high speed for two minutes. Polyethylene glycol of about 400 molecular weight, 35.0 g, was added, and the mixture was blended at high speed until homogeneous.

Example 4

Preparation of 30% W/W carbosulfan ST formulation containing a dye (formulation 4)

| Ingredients | % W/W | Amount (g) |
|---|---|---|
| Carbosulfan 40% solid base | 75.0 | 75.0 |
| Polyethylene glycol—400 mol. wgt. | 24.0 | 24.0 |
| Rhodamine B | 1.0 | 1.0 |
| Total | 100.0% | 100.0 g |

Carbosulfan 40% solid base, 75.0 g, was placed in a blender and blended at high speed while a mixture of 24.0 g of polyethylene glycol of about 400 molecular weight and 1.0 g of rhodamine B was added slowly in 5 g aliquots. Upon complete addition, the mixture was blended at high speed until homogeneous.

Example 5

Application of carbosulfan 25% ST (formulation 2) to rice seed for 1% carbosulfan load Seed lots 5A, 5B, and 5C

| Ingredients | % W/W | Amount (kg) |
|---|---|---|
| Lebonnet rice seed | 96.00 | 20.64 |
| Carbosulfan 25% W/W ST formulation | 4.00 | 0.86 |
| Total | 100.00% | 21.50 kg |

The rice seed, 20.64 kg, was de-dusted by tumbling the seed under a vacuum hose for two minutes. Carbosulfan 25% W/W seed treater formulation (Formulation 2, Example 2), 0.86 g, was mixed thoroughly with the de-dusted rice seed in a cement mixer for thirty minutes. Batch lots of 0.91 kg each were removed for germination studies at ten minute intervals during the thirty minute mixing period.

| Lot | Mixing time (minutes) |
|---|---|
| 5A | 10 |
| 5B | 20 |
| 5C | 30 |

## Example 6
Application of carbosulfan 25% ST (formulation 2) to cotton seed for 1% carbosulfan load
Seed lots 6A and 6B

A. Seed lot 6A: Acid-delinted cotton seed

| Ingredients | % W/W | Amount (g) |
|---|---|---|
| Acid-delinted cotton seed | 96.0 | 125.0 |
| Carbosulfan 25% W/W ST formulation | 4.0 | 5.2 |
| Total | 100.0% | 130.2 g |

Acid-delinted cotton seed, 125.0 g, was placed in a 0.95 liter jar, and 5.2 g of carbosulfan 25% w/w seed treater formulation (Formulation 2, Example 2) was added. The mixture was rolled until the seed treater formulation was uniformly dispersed on the seed surface.

B. Seed lot 6B: Machine-delinted cotton seed

| Ingredients | % W/W | Amount (g) |
|---|---|---|
| Machine-delinted cotton seed | 96.0 | 125.0 |
| Carbosulfan 25% W/W ST formulation | 4.0 | 5.2 |
| Total | 100.0% | 130.2 g |

The procedure above (6A), using Formulation 2 (Example 2), was repeated here to produce 130.2 g of machine-delinted cotton seed having a 1% w/w load of carbosulfan.

## Example 7
Application of carbosulfan 25% ST (formulation 3) to wheat seed for 0.5% carbosulfan load
Seed lots 7A and 7B

A. Seed lot 7A: Pre-treatment with water

| Ingredients | % W/W | Amount (g) |
|---|---|---|
| Ticonderoga wheat seed | 98.0 | 490.0 |
| Carbosulfan 25% W/W ST formulation | 2.0 | 10.0 |
| Total | 100.0% | 500.0 g |

Wheat seed, 490.0 g, was placed in a 0.95 liter jar, and 9.8 g of water was added (2% based on weight of seed). The jar was mechanically rolled until all the seed was completely wetted.
Carbosulfan 25% w/w seed treater formulation (Formulation 3, Example 3), 10.0 g, was added to the wetted seed in the jar, and rolling was continued until the seed treater formulation was uniformly dispersed on the seed surface (about ten minutes).

B. Seed lots 7B: No pre-treatment with water

| Ingredients | % W/W | Amount (g) |
|---|---|---|
| Ticonderoga wheat seed | 98.0 | 490.0 |
| Carbosulfan 25% W/W ST formulation | 2.0 | 10.0 |
| Total | 100.0% | 500.0 g |

Wheat seed, 490.0 g, was placed in a 0.95 liter jar, and 10.0 g of carbosulfan 25% w/w seed treater formulation (Formulation 3, Example 3) was added. The mixture was rolled until the seed treater formulation was uniformly dispersed on the seed surface.

### Example 8
Application of carbosulfan 25% ST (formulation 3) to wheat seed for 1% carbosulfan load
Seed lots 8A and 8B

A. Seed lot 8A: Pre-treatment with water

| Ingredients | % W/W | Amount (g) |
|---|---|---|
| Ticonderoga wheat seed | 96.0 | 480.0 |
| Carbosulfan 25% W/W ST formulation | 4.0 | 20.0 |
| Total | 100.0% | 500.0 g |

The seeds were treated in the manner described in Example 7A, using 9.6 g of water (2% based on weight of seed) to wet the seed prior to application of the seed treater formulation, Formulation 3 from Example 3.

B. Seed lot 8B: No pre-treatment with water

| Ingredients | % W/W | Amount (g) |
|---|---|---|
| Ticonderoga wheat seed | 96.0 | 480.0 |
| Carbosulfan 25% W/W ST formulation | 4.0 | 20.0 |
| Total | 100.0% | 500.0 g |

The seeds were treated in the manner described in Example 6, using seed treater Formulation 3 from Example 3.

### Example 9
Application of carbosulfan 30% ST (formulation 4) to wheat seed for 0.5% carbosulfan load
Seed lots 9A and 9B

A. Seed lot 9A: Pre-treatment with water

| Ingredients | % W/W | Amount (g) |
|---|---|---|
| Ticonderoga wheat seed | 98.3 | 491.5 |
| Carbosulfan 30% W/W ST formulation | 1.7 | 8.5 |
| Total | 100.0% | 500.0 g |

The seeds were treated in the manner described in Example 7A, using 9.8 g of water (2.0% based on weight of seed) to pre-wet the seed. Formulation 4 (Example 4) was the seed treater formulation used.

B. Seed lot 9B: No pre-treatment with water

| Ingredients | % W/W | Amount (g) |
|---|---|---|
| Ticonderoga wheat seed | 98.3 | 491.5 |
| Carbosulfan 30% W/W ST formulation | 1.7 | 8.5 |
| Total | 100.0% | 500.0 g |

The seeds were treated in the manner described in Example 6, using seed treater Formulation 4 from Example 4.

Example 10
Application of carbosulfan 30% ST (formulation 4) to wheat seed for 1% carbosulfan load
Seed lots 10A and 10B

A. Seed lot 10A: Pre-treatment with water

| Ingredients | % W/W | Amount (g) |
|---|---|---|
| Ticonderoga wheat seed | 96.6 | 483.0 |
| Carbosulfan 30% W/W ST formulation | 3.4 | 17.0 |
| Total | 100.0% | 500.0 g |

The seeds were treated in the manner described in Example 7A, using 9.5 g of water (1.9% based on weight of seed) to pre-wet the seed. Formulation 4 (Example 4) was the seed treated formulation used.

B. Seed lot 10B: No pre-treatment with water

| Ingredients | % W/W | Amount (g) |
|---|---|---|
| Ticonderoga wheat seed | 96.6 | 483.0 |
| Carbosulfan 30% W/W ST formulation | 3.4 | 17.0 |
| Total | 100.0% | 500.0 g |

The seeds were treated in the manner described in Example 6, using seed treater Formulation 4 from Example 4.

Example 11
Seed germination studies
Seeds treated with seed treater formulations of this invention were tested for germination viability.
The tests were conducted by the National Seed Testing Service, 2042 Birchwood Avenue, Toledo, Ohio 43614, using procedures formulated by the Association of Official Seed Analysts and set forth in their "Rules For Testing Seeds", *Proceedings of the Association of Official Seed Analysts*, Volume 60, No. 2, 1970. Germination data were obtained for treated seeds that had been stored for a period of 0 (Initial), 1, 3, 6, or 12 months at 70°F and 20—25% relative humidity. Storage time does not include transit time (generally less than one week) from Middleport, New York, where the treated seeds were prepared.

Procedure:
Upon receipt of the treated seeds or expiration of the appropriate storage time, four replicates of 100 seeds each were placed on non-phytotoxic paper towels soaked with distilled water. The towels were formed into rolled packages containing the seeds, and were kept wet with distilled water throughout the germination test. Depending on the type of seed used, the seed-towel packages were allowed to stand for 7 to 14 days at a temperature in the range of 20° to 30°C and a relative humidity of 95%:

| Seed | Temperature | Duration (days) |
|---|---|---|
| Rice[1] | 20°C/16 hr. 30°C/8 hr. | 14 |
| Cotton[1] | 20°C/16 hr. 30°C/8 hr. | 12 |
| Wheat | 20°C | 7 |

[1]—Temperature cycled each 24 hr.

The percent germination was determined by averaging the actual percent germination for the four replicates of each sample. These data are shown in the following table. Germination data for unstored treated seeds are given in the table as "Initial" data.

Germination data

| Seed lot no. | Seed | % Carbo-sulfan on seed | % Germination | | | | |
|---|---|---|---|---|---|---|---|
| | | | Init. | 1 Mo. | 3 Mo. | 6 Mo. | 12 Mo. |
| 5A | Rice | 1.0 | — | — | 79 | 77 | 73 |
| 5B | Rice | 1.0 | — | 79 | 81 | 78 | 62 |
| 5C | Rice | 1.0 | — | 80 | 76 | 75 | 68 |
| Carbosulfan only[1] | Rice | 1.0 | 68 | 72[2] | 64 | — | — |
| Untreated check | Rice | 0 | 77 | 83 | 88 | 86 | — |
| 6A | Cotton[3] | 1.0 | 93 | — | 94 | — | — |
| Untreated check A | Cotton[3] | 0 | 93 | — | 94 | — | — |
| 6B | Cotton[4] | 1.0 | 80 | — | 93 | — | — |
| Untreated check B | Cotton[4] | 0 | 79 | — | 85 | — | — |
| 7A | Wheat | 0.5 | 97 | 97 | 97 | — | — |
| 7B | Wheat | 0.5 | 98 | 98 | 98 | — | — |
| 8A | Wheat | 1.0 | 98 | 98 | 95 | — | — |
| 8B | Wheat | 1.0 | 97 | 96 | 97 | — | — |
| 9A | Wheat | 0.5 | 98 | 97 | 98 | — | — |
| 9B | Wheat | 0.5 | 97 | 97 | 97 | — | — |
| 10A | Wheat | 1.0 | 96 | 98 | 92 | — | — |
| 10B | Wheat | 1.0 | 97 | 98 | 97 | — | — |
| Carbosulfan only[1] | Wheat | 0.5 | 75 | 79 | 72 | — | — |
| Carbosulfan only[1] | Wheat | 1.0 | 62 | 35 | 55 | — | — |
| Untreated check | Wheat | 0 | — | 97 | 98 | — | — |

[1]—Seeds were treated only with carbosulfan technical
[2]—Treatment inhibited seedling growth
[3]—Acid delinted
[4]—Machine delinted

**Claims**

1. A substantially non-phytotoxic, pulverulent, dry-form seed treater composition containing a phytotoxic liquid pest control agent suitable for application to plant seeds, to product seeds and to seedlings against insects or nematodes, containing, by weight

(a) from 1 to 50% of a phytotoxic insect or nematode pest control agent that is a liquid at ambient temperature,

(b) from 5 to 60% of a binder-safener that is ethylene glycol, propylene glycol, trimethylene glycol, glycerol, a polyethylene glycol having a molecular weight in the range of 100 to 600, a polypropylene glycol having a molecular weight in the range of 200 to 1000, a block polymer of ethylene oxide and propylene oxide having a molecular weight in the range of 1000 to 5000 and a viscosity in the range of 150 to 800 mPa · s at a temperature in the range of 25° to 60°C, or a poly($C_{2-4}$ alkylene) glycol ether of a $C_{5-15}$ primary or secondary alcohol or of octylphenol or nonylphenol, the polyalkylene glycol ether having a molecular weight in the range of 300 to 4000 and a viscosity in the range of 200 to 4000 mPa · s at a temperature in the range of 25° to 60°C, with the proviso that the glycol or glycol derivative is substantially insoluble in or does not substantially solubilize the pest control agent at ambient temperature, and

(c) sufficient solid sorptive agriculturally acceptable carrier to produce a pulverulent solid composition.

2. A composition as claimed in Claim 1 in which the pest control agent is an N-substituted derivative of 2,3 - dihydro - 2,2 - dimethylbenzofuran - 7 - yl methylcarbamate.

3. A composition as claimed in Claim 2 in which the pest control agent is an N-(sulfenyl) derivative of 2,3 - dihydro - 2,2 - dimethylbenzofuran - 7 - yl methylcarbamate.

4. A composition as claimed in Claim 3 in which the pest control agent is 2,3 - dihydro - 2,2 - dimethyl - 7 - benzofuranyl[(di - n - butyl)aminosulfenyl] - [methyl]carbamate or 2,3 - dihydro - 2,2 - dimethyl - 7 - benzofuranyl[bis(ethoxycarbonylmethyl)aminosulfenyl][methyl]carbamate.

5. A composition as claimed in Claim 4 containing by weight

(a) from 10 to 50% of the pest control agent 2,3 - dihydro - 2,2 - dimethyl - 7 - benzofuranyl[(di - n - butyl)aminosulfenyl][methyl]carbamate,

(b) from 20 to 50% of the binder-safener, and

(c) sufficient carrier to produce the pulverulent solid composition.

6. A composition as claimed in any one of Claims 1 to 5 containing from 0.01 to 20% by weight of a chemical stabilizer epoxide compound.

7. A composition as claimed in any one of Claims 1 to 6 in which the pest control agent makes up from 10 to 35% by weight of the composition.

8. A composition as claimed in Claim 7 in which the pest control agent makes up from 20 to 30% by weight of the composition.

9. A composition as claimed in any one of Claims 1 to 8 in which the dry-form carrier makes up from 10 to 70% by weight of the composition.

10. A composition as claimed in Claim 9 in which the dry-form carrier makes up from 25 to 50% by weight of the composition.

11. A composition as claimed in any one of Claims 1 to 10 in which the binder-safener is polyethylene glycol having a molecular weight of about 400.

12. A composition as claimed in any one of Claims 1 to 5 in which the carrier is precipitated silica, hydrous calcium silicate, or a hydrous aluminum/magnesium silicate or mixture thereof.

13. A composition as claimed in Claim 12 in which the carrier is hydrous calcium silicate.

14. A composition as claimed in Claim 6 in which the pest control agent makes up from 10 to 35% by weight of the composition, the chemical stabilizer epoxide compound is epoxidized soybean oil, the binder-safener is polyethylene glycol having a molecular weight of about 400, and the carrier makes up from 10 to 70% by weight of the composition and is precipitated silica, hydrous calcium silicate, or a hydrous aluminum/magnesium silicate or mixture thereof.

15. A composition as claimed in Claim 14 in which the pest control agent makes up from 20 to 30% by weight of the composition and the carrier makes up from 25 to 50% by weight of the composition and is hydrous calcium silicate.

16. A method of protecting plant seeds and seedlings against insect or nematode pests comprising applying to the seeds, before they are planted, an insecticidally or nematicidally effective amount of a seed treater composition as claimed in any one of Claims 1 to 15.

17. A method as claimed in Claim 16 in which the seed treater composition is applied in such an amount as to give treated seeds where the weight of pest control agent is from 0.1 to 2.0% of the total weight of the treated seeds.

18. A method as claimed in Claim 17 in which the weight of pest control agent is from 0.1 to 1.0% of the total weight of the treated seeds.

19. A method as claimed in Claim 16, 17 or 18 in which the seeds to be protected are first wetted with water and the seed treater composition is applied to the wetted seeds.

20. A method of reducing the phytotoxicity of a phytotoxic liquid insect or nematode pest-control agent for use in a dry-form seed-treater composition comprising mixing with it a binder-safener as defined in Claim 1 section (b), the amount of binder-safener being 0.4 to 5 times the amount by weight of the phytotoxic liquid pest-control agent present.

21. A method as claimed in Claim 20 in which the amount of binder-safener is 0.4 to 2 times the amount by weight of the phytotoxic liquid pest-control agent present.

22. A method as claimed in Claim 20 or 21 in which the pest control agent is 2,3 - dihydro - 2,2 - dimethyl - 7 - benzofuranyl[(di - n - butyl)aminosulfenyl][methyl]carbamate.

23. A method as claimed in any one of Claims 20 to 22 in which the binder-safener is polyethylene glycol having a molecular weight of about 400.

24. Crop seed protected against insects or nematodes by an adherent coating containing an insect or nematode pest control agent in which the coating is obtained by applying a seed treater composition of any one of Claims 1 to 15 to the seeds to be protected.

25. Seed as claimed in Claim 24 in which the insect or nematode pest control agent makes up from 0.1 to 2.0% of the total weight of the protected seed.

**0 091 213**

26. Seed as claimed in Claim 25 in which the insect or nematode pest control agent makes up from 0.1 to 1.0% of the total weight of the protected seed.

27. Seed as claimed in any one of Claims 24 to 26 that is rice, cotton, or wheat seed.

**Patentansprüche**

1. Eine im wesentlichen nicht-phytotoxische pulverförmige Zusammensetzung in trockener Form zum Behandeln von Saatgut, enthaltend ein phytotoxisches flüssiges Schädlingsbekämpfungsmittel gegen Insekten oder Nematoden, das geeignet ist zum Aufbringen auf Pflanzensaatgut, Fruchtsaatgut und Keimlinge und das, bezogen auf das Gewicht, enthält:

(a) 1 bis 50% eines phytotoxischen insektiziden oder nematoziden Schädlingsbekämpfungsmittels, das bei Umgebungstemperatur flüssig ist,

(b) 5 bis 60% eines Binde- und Schutzmittels, welches Äthylenglykol, Propylenglykol, Trimethylenglykol, Glycerin, ein Polyäthylenglykol mit einem Molekulargewicht im Bereich von 100 bis 600, ein Polypropylenglykol mit einem Molekulargewicht im Bereich von 200 bis 1000, ein Blockpolymer von Äthylenoxid und Propylenoxid mit einem Molekulargewicht im Bereich von 1000 bis 5000 und einer Viskosität im Bereich von 150 bis 800 mPa · s bei einer Temperatur im Bereich von 25° bis 60°C, oder ein Poly($C_{2-4}$-alkylen)glykoläther eines primären oder sekundären $C_{5-15}$-Alkohols oder Octylphenols oder Nonylphenols ist, wobei der Polyalkylenglykoläther ein Molekulargewicht im Bereich von 300 bis 4000 und eine Viskosität im Bereich von 200 bis 4000 mPa · s bei einer Temperatur im Bereich von 25° bis 60°C aufweist, mit der Maßgabe, daß das Glycerin oder Glycerinderivat bei Umgebungstemperatur im wesentlichen unlöslich ist, in dem Schädlingsbekämpfungsmittel oder dieses im wesentlichen nicht löst, und

(c) genügend festen aufnahmefähigen landwirtschaftlich akzeptablen Träger, um eine pulverförmige fest Zusammensetzung zu bilden. ·

2. Zusammensetzung nach Anspruch 1, in der das Schädlingsbekämpfungsmittel ein N-substituiertes Derivat von 2,3 - Dihydro - 2,2 - dimethylbenzofuran - 7 - yl - methylcarbamat ist.

3. Zusammensetzung nach Anspruch 2, in der das Schädlingsbekämpfungsmittel ein N - (Sulfenyl) - Derivat von 2,3 - Dihydro - 2,2 - dimethylbenzofuran - 7 - yl - methylcarbamat ist.

4. Zusammensetzung nach Anspruch 3, in der das Schädlingsbekämpfungsmittel 2,3 - Dihydro - 2,2 - dimethyl - 7 - benzofuranyl[(di - n - butyl) - aminosulfenyl] - [methyl] - carbamat oder 2,3 - Dihydro - 2,2 - dimethyl - 7 - benzofuranyl - [bis - (äthoxycarbonylmethyl)aminosulfenyl] - [methyl] - carbamat ist.

5. Zusammensetzung nach Anspruch 4, enthaltend, bezogen auf das Gewicht,

(a) 10 bis 50% des Schädlingsbekämpfungsmittels 2,3 - Dihydro - 2,2 - dimethyl - 7 - benzofuranyl - [(di - n - butyl) - aminosulfenyl] - [methyl] - carbamat,

(b) 20 bis 50% des Binde- und Schutzmittels, und

(c) genügend Träger, um eine pulverförmige feste Zusammensetzung zu bilden.

6. Zusammensetzung nach einem der Ansprüche 1 bis 5, enthaltend 0,01 bis 20 Gew.-% einer Epoxidverbindung als chemischen Stabilisator.

7. Zusammensetzung nach einem der Ansprüche 1 bis 6, in der das Schädlingsbekämpfungsmittel 10 bis 35 Gew.-% der Zusammensetzung bildet.

8. Zusammensetzung nach Anspruch 7, in der das Schädlingsbekämpfungsmittel 20 bis 30 Gew.-% der Zusammensetzung bildet.

9. Zusammensetzung nach einem der Ansprüche 1 bis 8, in der der Träger in trockener Form 10 bis 70 Gew.-% der Zusammensetzung bildet.

10. Zusammensetzung nach Anspruch 9, in der der Träger in trockener Form 25 bis 50 Gew.-% der Zusammensetzung bildet.

11. Zusammensetzung nach einem der Ansprüche 1 bis 10, in der das Binde- und Schutzmittel Polyäthylenglykol mit einem Molekulargewicht von etwa 400 ist.

12. Zusammensetzung nach einem der Ansprüche 1 bis 5, in der der Träger gefälltes Siliciumdioxid, wasserhaltiges Calciumsilikat oder ein wasserhaltiges Aluminium/Magnesium-Silikat oder ein Gemisch davon ist.

13. Zusammensetzung nach Anspruch 12, in der der Träger wasserhaltiges Calciumsilikat ist.

14. Zusammensetzung nach Anspruch 6, in der das Schädlingsbekämpfungsmittel 10 bis 35 Gew.-% der Zusammensetzung bildet, die chemische Stabilisator-Epoxidverbindung epoxidiertes Sojabohnenöl ist, das Binde- und Schutzmittel Polyäthylenglykol mit einem Molekulargewicht von etwa 400 ist, und der Träger 10 bis 70 Gew.-% der Zusammensetzung bildet und gefälltes Siliciumdioxid, wasserhaltiges Calciumsilikat oder ein wasserhaltiges Aluminium/Magnesium-Silikat oder ein Gemisch davon ist.

15. Zusammensetzung nach Anspruch 14, in der das Schädlingsbekämpfungsmittel 20 bis 30 Gew.-% der Zusammensetzung bildet und der Träger 25 bis 50 Gew.-% der Zusammensetzung bildet und wasserhaltiges Calciumsilikat ist.

16. Verfahren zum Schützen von Pflanzensaatgut und Keimlingen gegen Insekten- oder Nematodenschädlinge, umfassend das Aufbringen einer insektizid oder nematozid wirksamen Menge einer

12

Zusammensetzung zum Behandeln von Saatgut gemäß einem der Ansprüche 1 bis 15 auf das Saatgut, bevor es gepflanzt wird.

17. Verfahren nach Anspruch 16, in dem die Zusammensetzung zum Behandeln von Saatgut in einer derartigen Menge aufgebracht wird, daß behandeltes Saatgut erhalten wird, indem das Gewicht des Schädlingsbekämpfungsmittels 0,1 bis 2,0% des Gesamtgewichts des behandelten Saatguts beträgt.

18. Verfahren nach Anspruch 17, in dem das Gewicht des Schädlingsbekämpfungsmittels 0,1 bis 1,0% des Gesamtgewichts des behandelten Saatguts beträgt.

19. Verfahren nach den Ansprüchen 16, 17 oder 18, in dem das zu schützende Saatgut zuerst mit Wasser befeuchtet und die Zusammensetzung zum Behandeln von Saatgut auf das befeuchtete Saatgut aufgebracht wird.

20. Verfahren zur Verringerung der Phytotoxizität eines phytotoxischen flüssigen Insekten- oder Nematoden-Schädlingsbekämpfungsmittels zur Verwendung in einer Zusammensetzung in trockener Form zum Behandeln von Saatgut, umfassend das Mischen eines Binde- und Schutzmittels gemäß Anspruch 1, Abschnitt (b) mit ihm, wobei die Menge des Binde- und Schutzmittels das 0,4- bis 5-fache der Gewichtsmenge des vorhandenen phytotoxischen flüssigen Schädlingsbekämpfungsmittels beträgt.

21. Verfahren nach Anspruch 20, in dem die Menge des Binde- und Schutzmittels das 0,4- bis 2-fache der Gewichtsmenge des vorhandenen phytotoxischen flüssigen Schädlingsbekämpfungsmittels beträgt.

22. Verfahren nach Anspruch 20 oder 21, in dem das Schädlingsbekämpfungsmittel 2,3 - Dihydro - 2,2 - dimethyl - 7 - benzofuranyl - [(di - n - butyl) - aminosulfenyl] - [methyl] - carbamat ist.

23. Verfahren nach einem der Ansprüche 20 bis 22, in dem das Binde- und Schutzmittel Polyäthylenglykol mit einem Molekulargewicht von etwa 400 ist.

24. Feldfruchtsaatgut, geschützt gegen Insekten oder Nematoden durch einen anhaftenden, ein Insekten- oder Nematoden-Schädlingsbekämpfungsmittel enthaltenden Belag, bei dem der Belag durch Aufbringen einer Zusammensetzung zum Behaldeln von Saatgut gemäß einem der Ansprüche 1 bis 15 auf das zu schützende Saatgut erhalten wird.

25. Saatgut nach Anspruch 24, bei dem das Insekten- oder Nematoden-Schädlingsbekämpfungsmittel 0,1 bis 2,0% des Gesamtgewichts des geschützten Saatguts beträgt.

26. Saatgut nach Anspruch 25, bei dem das Insekten- oder Nematoden-Schädlingsbekämpfungsmittel 0,1 bis 1,0% des Gesamtgewichts des geschützten Saatguts beträgt.

27. Saatgut nach einem der Ansprüche 24 bis 26, wobei das Saatgut Reis-, Baumwoll- oder Weizensamen ist.

## Revendications

1. Composition pour le traitement des semences, pratiquement non phytotoxique pulvérulente, sous forme sèche, contenant un agent pesticide liquide phytotoxique convenant pour l'application à des semences de plantes, à des semences de produits et à des plantes de semis contre les insectes ou nématodes, contenant en poids:

(a) de 1 à 50% d'un agent pesticide contre les insectes ou les nématodes phytotoxique, qui est un liquide à la température ambiante,

(b) de 5 à 60% d'un liant-agent assurant la sécurité qui est l'éthylène glycol, le propylène glycol, le triméthylène glycol, le glycérol, un polyéthylène glycol ayant une masse moléculaire dans l'intervalle de 100 à 600, un polypropylène glycol ayant une masse moléculaire dans l'intervalle de 200 à 1 000, un polymère séquencé de l'oxyde d'éthylène et de l'oxyde de propylène ayant une masse moléculaire dans l'intervalle de 1 000 à 5 000 et une viscosité dans l'intervalle de 150 à 800 mPa · s à une température dans l'intervalle de 25° à 60°C, ou un éther poly(alkylène en $C_2$ à $C_4$) glycolique d'un alcool primaire ou secondaire en $C_5$ à $C_{15}$ ou de l'octylphénol ou du nonylphénol, l'éther polyalkylène glycolique ayant une masse moléculaire dans l'intervalle de 300 à 4 000 et une viscosité dans l'intervalle de 200 à 4 000 mPa · s à une température dans l'intervalle de 25 à 60°C, sous réserve que le glycol ou le dérivé du glycol est pratiquement insoluble dans l'agent pesticide ou ne le solubilise pas notablement à la température ambiante, et

(c) une quantité de support sorbant solide acceptable en agriculture suffisante pour produire une composition solide pulvérulente.

2. Composition suivant la revendication 1, dans laquelle l'agent pesticide est un dérivé N-substitué du méthyl carbamate de 2,3 - dihydro - 2,2 - diméthylbenzofuran - 7 - yle.

3. Composition suivant la revendication 2, dans laquelle l'agent pesticide est un dérivé N-(sulfénylé) du méthylcarbamate de 2,3 - dihydro - 2,2 - diméthylbenzofuran - 7 - yle.

4. Composition suivant la revendication 3, dans laquelle l'agent pesticide est le méthylcarbamate de 2,3 - dihydro - 2,2 - diméthyl - 7 - benzofuranyl[(di - n - butyl)aminosulfényle] ou le méthylcarbamate de 2,3 - dihydro - 2,6 - diméthyl - 7 - benzofuranyl[bis(éthoxycarbonylméthyl)aminosulfényle].

5. Composition suivant la revendication 4, contenant en poids:

(a) de 10 à 50% de l'agent pesticide méthylcarbamate de 2,3 - dihydro - 2,2 - diméthyl - 7 - benzofuranyl[(di - n - butyl)aminosulfényle],

(b) de 20 à 50% du liant-agent assurant la sécurité, et

(c) une quantité de support suffisante pour produire la composition solide pulvérulente.

6. Composition suivant l'une quelconque des revendications 1 à 5, contenant de 0,01 à 20% en poids de composé époxyde comme stabilisant chimique.

7. Composition suivant l'une quelconque des revendications 1 à 6, dans laquelle l'agent pesticide représente de 10 à 35% en poids de la composition.

8. Composition suivant la revendication 7, dans laquelle l'agent pesticide représente de 20 à 30% en poids de la composition.

9. Composition suivant l'une quelconque des revendications 1 à 8, dans laquelle le support sous forme sèche représente de 10 à 70% en poids de la composition.

10. Composition suivant la revendication 9, dans laquelle le support sous forme sèche représente de 25 à 50% en poids de la composition.

11. Composition suivant l'une quelconque des revendications 1 à 10, dans laquelle le liant-agent assurant la sécurité est un polyéthylène glycol ayant une masse moléculaire d'environ 400.

12. Composition suivant l'une quelconque des revendications 1 à 5, dans laquelle le support est de la silice précipitée, du silicate de calcium hydraté, ou un silicate d'aluminium/magnésium hydraté ou un mélange de ceux-ci.

13. Composition suivant la revendication 12, dans laquelle le support est du silicate de calcium hydraté.

14. Composition suivant la revendication 6, dans laquelle l'agent pesticide représente de 10 à 35% en poids de la composition, le composé époxyde utilisé comme stabilisant chimique est de l'huile de soja époxydée, le liant-agent assurant la sécurité est un polyéthylène glycol ayant une masse moléculaire d'environ 400, et le support représente de 10 à 70% en poids de la composition et est de la silice précipitée, du silicate de calcium hydraté, ou un silicate d'aluminium/magnésium hydraté ou un mélange de ceux-ci.

15. Composition suivant la revendication 14, dans laquelle l'agent pesticide représente de 20 à 30% en poids de la composition et le support représente de 20 à 50% en poids de la composition et est du silicate de calcium hydraté.

16. Procédé de protection des semences de plantes et des plantes de semis contre les parasites insectes et nématodes comprenant l'application sur les semences, avant qu'elles ne soient plantées, d'une quantité efficace comme insecticide ou nématicide d'une composition de traitement des semences suivant l'une quelconque des revendications 1 à 15.

17. Procédé suivant la revendication 16, dans lequel la composition de traitement des semences est appliquée dans une quantité telle qu'elle donne des semences traitées dans lesquelles le poids d'agent pesticide est de 0,1 à 2,0% du poids total des semences traitées.

18. Procédé suivant la revendication 17, dans lequel le poids d'agent pesticide est de 0,1 à 1,0% du poids total des semences traitées.

19. Procédé suivant les revendications 16, 17 ou 18, dans lequel les semences à protéger sont d'abord mouillées avec de l'eau et la composition de traitement des semences est appliquée sur les semences mouillées.

20. Procédé de réduction de la phototoxicité d'un agent pesticide contre les insectes ou les nématodes, liquide, phytotoxique pour l'utilisation dans une composition de traitement des semences sous forme sèche, comprenant le mélange avec celui-ci d'un liant-agent assurant la sécurité tel que défini dans la revendication 1, section (b), la quantité de liant-agent assurant la sécurité étant 0,4 à 5 fois la quantité pondérale d'agent pesticide liquide phytotoxique présent.

21. Procédé suivant la revendication 20, dans lequel la quantité de liant-agent assurant la sécurité est 0,4 à 2 fois la quantité pondérale d'agent pesticide liquide phytotoxique présent.

22. Procédé suivant la revendications 20 ou 21, dans lequel l'agent pesticide est le méthylcarbamate de 2,3 - dihydro - 2,2 - diméthyl - 7 - benzofuranyl[(di - *n* - butyl)aminosulfényle].

23. Procédé suivant l'une quelconque des revendications 20 à 22, dans lequel le liant-agent assurant la sécurité est un polyéthylène glycol ayant une masse moléculaire de 400.

24. Semence de plante cultivée protégée contre les insectes ou les nématodes par un revêtement adhérent contenant un agent pesticide contre les insectes ou les nématodes dans lequel le revêtement est obtenu en appliquant une composition de traitement des semences suivant l'une quelconque des revendications 1 à 15 aux semences à protéger.

25. Semence suivant la revendication 24, dans laquelle l'agent pesticide contre les insectes ou les nématodes représente de 0,1 à 2,0% du poids total de la semence protégée.

26. Semence suivant la revendication 25, dans lequel l'agent pesticide contre les insectes ou les nématodes représente de 0,1 à 1,0% du poids total de la semence protégée.

27. Semence suivant l'une quelconque des revendications 24 à 26, qui est une semence de riz, de coton ou de blé.